# EUROPEAN PATENT APPLICATION

(11) **EP 1 864 580 A1**
(43) Date of publication of application: **12.12.2007**
(21) Application number: 07011280.0
(22) Date of filing: 08.06.2007
(51) Int. Cl.: A23L 1/212, A23L 2/38, A23L 2/39, A23F 5/44

(54) **Preparation for obtaining a fig-based drink and method for producing said drink**

(30) Priority: 08.06.2006 AR P060102389
(71) Applicant: Hector, Eduardo, Sibilla, Av. del Golfo 280 Salta Prov. de Salta (AR)
(72) Inventor: Hector, Eduardo, Sibilla, Av. del Golfo 280 Salta Prov. de Salta (AR)
(74) Representative: Grünecker, Kinkeldey, Stockmair & Schwanhäusser Anwaltssozietät

(57) **Abstract**

This invention refers to a food product and a method for the obtention thereof. It is a powder for the preparation of a fig-based drink for consumption. The process includes washing, chopping, chopping and milling the figs to obtain product to prepare and infusion, plus a method to obtain a dehydrated product to produce instant fig beverage.

## Description

This invention refers to a food product and method for obtaining it. It is a powder for the preparation of a consumption fig-based drink. In practice, it is an excellent substitute for coffee.

### Background

As far as fig infusions are concerned, both in literature and in natural medicine, there exists a fig infusion, which consists in collecting ripe figs or fig raisins or dry figs, boiling them and drinking said infusion.

A fig is a fruit that has been very popular in different cultures since ancient times. The fresh fruit is made up by 80% of water and 12% of sugar. Once dry, said rates vary considerably to less than 20% humidity and more than 48% of sugar. Its nutritional features are strengthen when they are dry.

The ripe fig is a very good digestive fruit. Whether dry or fresh, figs are an excellent tonic for people who make physical or intellectual efforts. They contain a big amount of sugar and little fat and proteins, but it is rich in minerals and fiber.

The fig tree is a medium size tree with rough leaves which grows in hydric scarcity and salinity. Some fig trees produce two fruit harvests: early fig in spring and fig in autumn. Figs are green, purple or blue with a variable size. They require a warm weather since they do not bear low temperatures and they also tolerate long drought periods. There exist about 600 fig varieties, such as Katoda, Adriatic, Turkey Brown, Calimyrna, etc.

### Detailed Description of the Invention

Basically, the product of this invention is obatined by means of the following process:
harvesting figs in baskets;
washing them with water;
placing them in sieves and introducing them into a drier at a temperature from 55 to 90°C for 24 to 48 hours. Upon having finished this stage, the resulting product contains between 10 and 30 % humidity

Said product is allowed to cool at room temperature and the dry figs are chopped by means of an industrial chopper so that sizes are unified in order to achieve an homogeneous roasting process.

Chopped figs are placed in stainless steel trays and subjected to a temperature between 250 to 300°C for **60 minutes**.

In this way, the chopped and roasted fig is allowed to cool at room temperature and it is milled until it becomes powder. The product is a like a dark fine sand having a thickness between impalpable to **0.5 mm.**

For its commercialization, the product is packaged in bags (tea-bags or coffee-bags type) of 2 grams each portion.

It is seen that in relation to the obtained product, it is rich in carbon hydrates (sacarose, glucose, fructose), thus having a high caloric value, a high fiber and mineral content, such as potassium and magnesium.

### Chemical composition of the product

Aiming to define the product, its chemical composition has been obtained wherein the components appearing in the table below may be seen: (per 100gr. of product):

| **PRODUCT** | **g** | **100** |
|---|---|---|
| Water | g | 3.34 |
| Energy | kcal | 363 |
| Protein | g | 5.80 |
| Lipids | g | 1.28 |
| Ashes | g | 4.27 |
| Carbohydrates | g | 82.21 |
| Raw fiber | g | 3.20 |
| Total sugars | g | 61.80 |
| Sacarose | g | 0.082 |
| Glucose | g | 31.89 |
| Fructose | g | 29.50 |
| Cholesterol | mg | 0.00 |
| Histidine Amino acid | g | 0.046 |
| Isoleucine Amino acid | g | 0.11 |
| Leucine amino acid | g | 0.16 |
| Lisine amino acid | g | 0.11 |
| Sulphured amino acids | g | 0.087 |
| Aromatic amino acids | g | 0.146 |
| Threonine amino acids | g | 0.106 |
| Tryptophane amino acids | g | 0.025 |
| Valine amino acid | g | 0.152 |
| Calcium | mg | 217 |
| Iron | mg | 7 |
| Magnesium | mg | 134 |
| Phosphorous | mg | 89.78 |
| Potassium | mg | 1450 |
| Sodium | mg | 25 |
| Zinc | mg | 0.74 |
| Copper | mg | 0.39 |
| Manganesium | mg | 0.69 |
| Selenium | mcg | 0.82 |
| Vitamine C | mg | 1.64 |
| Thiamine | mg | 0.11 |
| Riboflavine | mg | 0.11 |
| Niacine | mg | 0.83 |
| Pantoteic acid | mg | 0.58 |
| Vitamine B6 | mg | 0.14 |
| Vitamine A | IU | 14 |
| Vitamine E | mg | 0.47 |
| Vitamine K | mcg | 20.9 |

In relation to the treatment of figs to obtain the product of this invention, it may be substantially improved and several of the methods used for coffee, barley and some coffee substitutes may be used. Likewise the process of this invention may be carried out at a larger scale and the roasting methods may be carried out at pressures higher than the atmospheric pressure.. It is also possible to experiment with fast roasting processes in order to enhance its yield and density. It could also be expected that a fast roasting process reduces the product acidity.

### NEW MATTER

After filing the priority application, the inventor developed a new product based on the original product obtained with the process of claim one. This method allows to prepare "instant fig beverage" instead of the "fig infusion" claimed in claims 1 to 7. the process begins with the fig product to use as infusion. The already dry, roasted and milled fig product is mixed with water. The resulting mixture is heated until boiling point. Next , the hot mixture is filtered with a cellulose paste filter. Maltodextrin at 14% is added to the already filtered solution and it shakes until the maltodextrin is dissolved. The solution with maltodextrin is dried with spray drying machines with incoming air under temperatures between 250 °C and 300 °C and outgoing air with temperatures between 70°C and 100°C . Optionally , the resulting product may be sifted to eliminate compacted particles.

Regarding proportions , for each kilogram of dry, roasted and milled fig product, the process needs 1,5 kg of maltodextrin and 3 litres of water. The solution obtained after dissolving maltodextrin is 65% of water.

Of course, the final product may be granules by means of well-known methods in the industry. Moreover, freeze drying method may the adapted as well.

## Claims

1. A process for producing roasted fig in powder from fresh fig collected from a fig tree, **characterized in that** it comprises the following steps:
- washing the figs;
- subjecting the washed figs to a drying process and obtaining a product having between 10 and 30 % humidity;
- chopping the dry figs;
- roasting said dry and chopped figs;
- milling the fig until a powder thereof is obtained;

2. The process of claim 1, **characterized in that** the drying process is carried out by subjecting the fresh and washed fig to a temperature from 55 to 90°C for a period of 24 to 48 hours.

3. The process of claim 1, **characterized in that** said figs are chopped in order to obtain pieces having a size ranging between 10 mm to 20 mm

4. The process of claim 1, **characterized in that** the roasting process comprises subjecting the dry and chopped fig to a temperature from 250 to 300°C for a period of 60 minutes.

5. The process of claim 1, **characterized in that** the milling process renders powder having a grain size ranging between impalpable to 0.5 mm.

6. The dry, roasted and milled fig product for the preparation of a drinkable infusion which is obtained by using the process of claim 1.

7. The process of claim 1, **characterized in that** it includes the following steps:
- washing figs;
- subjecting the fresh and washed fig to a temperature from 55 to 90 °C for a period of 24 hours;
- chopping said dry figs to obtain pieces having a size ranging between 10 mm and 20 mm;
- subjecting the dry and chopped fig to a temperature of 250 to 300°C for a period of 60 minutes;
- milling the roasted fig pieces until a powder is obtained, which grain size ranges between impalpable and 0.5 mm.

8. A process for instant fig beverage from the product of claim 1 or 7, **characterized in that** it comprises the following steps:
- mixing the fig powder product of claim 1 or 7 with water to obtain a solution;
- heating the solution of fig powder product and water until boiling point;
- filtering the hot solution;
- adding and dissolving a carrier with the filtered solution;
- drying the carrier filtered solution ;

9. The method of claim 8 **characterized in that** a cellulose paste filter is used for filtering the hot solution.

10. The method of claim 8 **characterized in that** the carrier is maltodextrin added is at 14%.

11. The method of claim 8 **characterized in that** the method to dry the carrier filtered solution is spray drying with incoming air with temperatures between 250°C and 300°C and outgoing air with temperatures between 70°C and 100°C.

12. The method of claim 8 **characterized in that** for each 1,5 kg of dry, roasted and milled fig product as described on claim 6, three litres of water are used to obtain the first solution.

13. The dehydrated fig powder product for the preparation of a drinkable beverage which is obtained by using the process of claim 8.
